# EUROPÄISCHE PATENTANMELDUNG

(11) **EP 4 295 984 A1**
(43) Veröffentlichungstag der Anmeldung: **27.12.2023**
(21) Anmeldenummer: 22179949.7
(22) Anmeldetag: 20.06.2022
(51) Int. Cl.: B23K 26/00, B61H 5/00, B61H 13/34, F16D 65/12, C23C 4/02, C23C 4/06

(54) **VERFAHREN ZUR HERSTELLUNG EINER SCHIENENFAHRZEUGBREMSSCHEIBE, SOWIE SCHIENENFAHRZEUGBREMSSCHEIBE**

(71) Anmelder: Industrie Holding Isselburg GmbH, 46419 Isselburg (DE)
(72) Erfinder: Engels, Dirk, 40666 Meerbusch (DE); Kaiser, Ralf, 46414 Rhede (DE); Bergerfurth, Jürgen, 46419 Isselburg (DE); Wüller, Eike, 46562 Voerde (DE)
(74) Vertreter: Patentanwälte Bauer Vorberg Kayser

(57) **Zusammenfassung**

Die Erfindung betrifft ein Verfahren zur Herstellung einer Schienenfahrzeugbremsscheibe 1 und umfasst die folgenden Schritte: a) Herstellen eines Grundkörpers 6 mittels eines Gussverfahrens, wobei der Grundkörper 6 wenigstens einen Reibbereich 3 aufweist, und wobei der wenigstens eine Reibbereich 3 zunächst in einem Untermaß hergestellt wird. Schritt b): Aufbringen einer Verbindungsschicht 7 auf den wenigstens einen Reibbereich 3 mittels Laserauftragsschweißens. Schritt c): Aufbringen einer Verschleißschicht 8 auf die Verbindungsschicht 7 mittels Laserauftragsschweißens, und c) Fertigbearbeiten des wenigstens einen Reibbereichs 3 durch wenigstens einen Schleifvorgang zu einer Reibfläche 2.

## Beschreibung

Die Erfindung betrifft ein Verfahren zur Herstellung einer Schienenfahrzeugbremsscheibe sowie eine Schienenfahrzeugbremsscheibe.

Schienenfahrzeuge sind vor allem aufgrund ihrer Größe und ihres Gewichtes klar von Kraftfahrzeugen zu unterscheiden, da sich aus den Dimensionen ein gänzlich anderer Aufbau der Fahrzeuge ergibt. Kraftfahrzeuge sind definiert als sich auf Land durch Motorenkraft bewegende Fahrzeuge, welche nicht an Gleise gebunden sind. Schienenfahrzeuge sind jedoch an Gleise gebunden und in der Regel über stählerne Rad-Schiene-Systeme geführt. Stählerne Rad-Schienen-Systeme werden aus dem Grund verwendet, da sich die Massen von Schienenfahrzeugen wie etwa Zügen regelmäßig im Bereich von mehreren 100 t bewegen, während sich die Massen von Kraftfahrzeugen meist im Bereich von wenigen Tonnen bewegen, sodass im PKW- bzw. auch LKW-Bereich in der Regel mit Luft gefüllte Räder zum Einsatz kommen können.

Die vorliegende Erfindung bezieht sich ausschließlich auf Schienenfahrzeuge und ausdrücklich nicht auf Kraftfahrzeuge. Es ist allgemein bekannt, dass Schienenfahrzeugbremsscheiben, die im Folgenden kurz auch Bremsscheiben genannt werden, aus einem tellerförmigen Grundkörper aus Metallguss hergestellt werden. Nach dem Gießvorgang ist es möglich, bestimmte Flächen jenes Grundkörpers nachzubearbeiten. Beispielsweise können die Kontaktstellen zwischen der Bremsscheibe und der Aufnahme an den abzubremsenden Wellen (beispielsweise Radsatzwellen der Schienenfahrzeuge) zur besseren Anbindung plangefräst oder auch der Grundkörper mit Bohrungen zur Befestigung der Bremsscheibe versehen werden.

Der Grundkörper der Bremsscheibe umfasst wenigstens eine Reibfläche, die mit einem Bremsbelag zum Bremsen des Schienenfahrzeugs in Kontakt gebracht wird. Damit eine möglichst hohe Bremswirkung erzielt wird, muss unter anderem ein möglichst hoher Reibwert zwischen Reibfläche und Bremsbelag herrschen. Während des Bremsvorgangs wird die Reibfläche an dem Bremsbelag vorbeigeführt und der Bremsbelag auf die Reibfläche gedrückt. Dabei wird die kinetische Energie in Wärmeenergie umgesetzt.

Beim Bremsvorgang verschleißen sowohl die Reibfläche als auch der Bremsbelag. Der Bremsbelag kann in der Regel konstruktionsbedingt deutlich einfacher ausgeführt werden als die Bremsscheibe und verschleißt erheblich schneller als die Reibfläche der Bremsscheibe. Die in der Herstellung regelmäßig deutlich teurere Bremsscheibe weist eine längere Lebensdauer als der Bremsbelag.

Die Lebensdauer der Bremsscheibe ist durch fortlaufende Reibbelastung aber ebenfalls begrenzt. Die Bremsscheibe wird im Bereich der Reibfläche durch den resultierenden Verschleiß immer dünner, sodass ab einem bestimmten Punkt die Festigkeit der Bremsscheibe nicht mehr gewährleistet ist. Ist die Bremsscheibe verschlissen, muss dieses relativ teure Bauteil ausgetauscht werden.

Die zugrundeliegende Aufgabe der Erfindung ist es daher, ein Verfahren zu Herstellung einer Schienenfahrzeugbremsscheibe sowie eine Schienenfahrzeugbremsscheibe selbst unter wirtschaftlicheren Gesichtspunkten bereitzustellen, insbesondere mit geringerem Verschleiß gegenüber herkömmlichen Schienenfahrzeugbremsscheiben aus dem Stand der Technik bzw. bei günstigen Herstellungsbedingungen unter geringem Materialaufwand.

Diese Aufgabe wird durch das Verfahren bzw. die Vorrichtung der unabhängigen Patentansprüche gelöst. Vorteilhafte Ausgestaltungen der Erfindung sind Gegenstand der abhängigen Ansprüche bzw. gehen aus der nachfolgenden Beschreibung hervor.

Es ist darauf hinzuweisen, dass die in den Ansprüchen einzeln aufgeführten Merkmale in beliebiger, technisch sinnvoller Weise miteinander kombiniert werden können (auch über Kategoriegrenzen, beispielsweise zwischen Verfahren und Vorrichtung, hinweg) und weitere Ausgestaltungen der Erfindung aufzeigen. Die Beschreibung charakterisiert und spezifiziert die Erfindung insbesondere im Zusammenhang mit den Figuren zusätzlich.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Die vorliegende Erfindung hat den Vorteil erkannt, dass die Lebensdauer einer Schienenfahrzeugbremsscheibe erheblich erhöht werden kann, wenn sowohl eine Verbindungsschicht als Vermittlungsschicht als auch eine Verschleißschicht als äußere der Belastung beim Bremsvorgang ausgesetzte Reibfläche auf einem Bremsscheibengrundkörper vorgesehen werden. Die vorschlagsgemäße Bremsscheibe ist besonders wirtschaftlich, da ein guter Kompromiss zwischen Eigenstabilität der gesamten Beschichtung aus Verbindungsschicht und Verschleißschicht, sowie einer Bereitstellung einer hochwertigen verschleißarmen Verschleißschicht gefunden wurde. Das vorschlagsgemäße Herstellungsverfahren kommt mit einem minimalen Materialeinsatz aus, insbesondere durch eine Fertigung des Grundkörpers im Untermaß.

Das vorschlagsgemäße Verfahren zur Herstellung einer Schienenfahrzeugbremsscheibe umfasst die folgenden Schritte:
a) Herstellen eines Grundkörpers mittels eines Gussverfahrens, wobei der Grundkörper wenigstens einen Reibbereich aufweist, und wobei der wenigstens eine Reibbereich zunächst in einem Untermaß hergestellt wird,
b) Aufbringen einer Verbindungsschicht auf den wenigstens einen Reibbereich mittels Laserauftragsschweißens,
c) Aufbringen einer Verschleißschicht auf die Verbindungsschicht mittels Laserauftragsschweißens, und
d) Fertigbearbeiten des wenigstens einen Reibbereichs durch wenigstens einen Schleifvorgang zu einer Reibfläche.

Die vorschlagsgemäße Schienenfahrzeugbremsscheibe weist einen Grundkörper und wenigstens eine Reibfläche zur Kontaktierung mit einem Bremsbelag zum Bremsen eines Schienenfahrzeugs auf, wobei der Grundkörper aus einem Eisengussmaterial hergestellt ist. Die vorschlagsgemäße Schienenfahrzeugbremsscheibe ist dadurch gekennzeichnet, dass zwischen dem Grundkörper der wenigstens einen Reibfläche sowohl eine, vorzugsweise mittels Laserauftragsschweißens aufgebrachte, Verbindungsschicht als auch eine, vorzugsweise mittels Laserauftragsschweißens aufgebrachte, Verschleißschicht vorgesehen ist, wobei die Verbindungsschicht aus einer ersten Materialkombination gebildet ist und wobei die Verschleißschicht aus einer zweiten Materialkombination gebildet ist, wobei die zweite Materialkombination von der ersten Materialkombination abweicht, wobei die wenigstens eine Reibfläche durch eine Außenseite der Verschleißschicht ausgebildet ist.

Eine Schienenfahrzeugbremsscheibe, im Folgenden auch kurz Bremsscheibe genannt, ist ein sehr großes und relativ massives Bauteil. Eine solche Schienenfahrzeugbremsscheibe wiegt insbesondere wenigstens 40 kg und kann bis zu 200 kg wiegen. Der Durchmesser von Schienenfahrzeugbremsscheiben beträgt insbesondere mindestens 500 mm und kann bis zu 1000 mm betragen. Die Dicke einer Schienenfahrzeugbremsscheibe beträgt insbesondere mindestens 50 mm und kann bis zu 200 mm betragen.

Durch die Größe und das Gewicht der Bremsscheibe bietet es sich an, den Grundkörper der Bremsscheibe gemäß Verfahrensschritt a) in einem Gussverfahren (insbesondere aus Eisengussmaterial) herzustellen.

Ein solcher Grundkörper kann tellerförmig oder ringförmig ausgeführt sein und ist im Wesentlichen rotationssymmetrisch. Im Wesentlichen rotationssymmetrisch bedeutet im Sinne der Anmeldung, dass der Grundkörper zum Beispiel durch konstruktive Merkmale wie Bohrungen, Abflachungen, Aufdickungen oder dergleichen von der Rotationssymmetrie abweichen kann. Auch Elemente zur Belüftung können beispielsweise konzentrisch zur Symmetrieachse an dem Grundkörper angebracht sein, wobei die Anordnung dieser Elemente nicht rotationssymmetrisch ist.

Der Grundkörper wird in einer Gussform hergestellt. Die Gussform entspricht dabei im Wesentlichen der Negativform der Bremsscheibe. Die Bereiche des Grundkörpers, an denen bestimmungsgemäß im späteren Betrieb der fertigen Bremsscheibe grundsätzlich die Bremsbeläge angreifen, werden Reibbereiche genannt. In der Gussform sind diese Reibbereiche vorschlagsgemäß mit einem Untermaß versehen, sodass an dem gegossenen Grundkörper an den Reibbereichen im Vergleich zur fertigen Bremsscheibe eine gewisse Materialstärke fehlt. Dies unterscheidet den Grundkörper von üblichen Grundkörpern gemäß Stand der Technik, die üblicherweise in einem Fertigmaß gegossen werden oder in einem Übermaß gegossen und auf ein Fertigmaß bearbeitungstechnisch, etwa durch Fräsen, reduziert. Vorteilhaft wird vorschlagsgemäß Material eingespart.

Die finale Fläche, an der bestimmungsgemäß die Reibung zwecks Abbremsung erfolgen soll, wird Reibfläche genannt. Gemäß Stand der Technik sind teilweise gegossene Grundkörper für Schienenfahrzeugbremsscheiben vorgeschlagen, die über die Außenseite des Grundkörpers im Reibbereich bereits die fertige Reibfläche bereitstellen, oder die beispielsweise zunächst im Übermaß gegossen wurden und nach einem Abfräsvorgang die finale Reibfläche an der abgefrästen Außenseite des Grundkörpers bereitstellen. Vorschlagsgemäß stellt die Außenseite des Grundkörpers jedoch nicht die finale Reibfläche bereit, sondern ist im Untermaß gefertigt, sodass weitere, auch Material hinzufügende, Fertigungsschritte erfolgen, um die finale Reibfläche zur Verfügung zu stellen.

Der Grundkörper mit dem wenigstens einen Reibbereich weist in einem fertigbearbeiteten Zustand mitsamt der dann zur Verfügung gestellten Reibfläche Soll-Abmessungen auf. Diese Soll-Abmessungen des Grundkörpers mitsamt Reibbereich sind für die Herstellung der Bremsscheibe vorgegeben.

Der Grundkörper mit dem wenigstens einen Reibbereich weist in einem Zustand vor dem Aufbringen der Verbindungsschicht und/oder der Verschleißschicht im Reibbereich Untermaß-Abmessungen auf. Diese Untermaß-Abmessungen im Reibbereich sind kleiner als die Soll-Abmessungen im Reibbereich. Die Untermaß-Abmessungen sind vorzugsweise für die Herstellung der Bremsscheibe ebenfalls vorgegeben.

Werden beispielsweise zwei ringförmige Reibbereiche gegenüberliegend an der vorschlagsgemäßen Bremsscheibe vorgesehen, so ist der Abstand dieser beiden Reibbereiche aufgrund des Untermaßes zu gering. Anders ausgedrückt ist die Dicke der Bremsscheibe im Bereich der Reibbereiche aufgrund des Untermaßes zu gering.

Das Untermaß, also die Differenz zwischen der Soll-Abmessung und der Untermaß-Abmessung des jeweiligen Reibbereichs kann beispielsweise 200 µm, 300 µm, 400 µm, 600 µm oder 800 µm betragen und richtet sich nach den später aufzubringenden Schichtdicken der Verbindungsschicht und der Verschleißschicht.

Um den Grundkörper in den Reibbereichen auf die Maße der fertigen Bremsscheibe bzw. auf Soll-Abmessungen zu bringen, wird zunächst im Verfahrensschritt b) eine Verbindungsschicht auf den wenigstens einen Reibbereich aufgebracht. Dazu wird mittels Laserauftragsschweißen ein Material wie zum Beispiel ein Metall aufgebracht, sodass der Reibbereich durch den Materialauftrag aufgedickt wird.

Beim Laserauftragsschweißen wird ein auf eine Oberfläche aufzutragendes Material mittels eines Lasers aufgeschmolzen. Im vorliegenden Fall wird also das Material der Verbindungsschicht bzw. die erste Materialkombination mittels Laserstrahlung aufgeschmolzen und verflüssigt. Das Material kann dazu beispielsweise zunächst in Pulverform bereitgestellt werden. Zudem wird die zu bearbeitende Oberfläche (im vorliegenden Fall des Grundkörpers) auf- bzw. angeschmolzen, sodass die Oberfläche mit dem aufgetragenen Material verschmelzen kann und sich auf der Oberfläche eine Schicht aus dem aufgetragenen Material bildet. Dabei wird das Material der zu bearbeitenden Oberfläche (hier des Grundkörpers) nur in einem Grenzbereich zur aufgetragenen Schicht mit dem aufgetragenen Material vermischt, während die aufgetragene Schicht im Wesentlichen nur aus dem aufgetragenen Material selbst besteht. Grundsätzlich gibt es hierbei die beiden Möglichkeiten, dass, erstens, zuvor die zu beschichtende Oberfläche (hier des Grundkörpers) bereits angeschmolzen wird, dann das Pulver noch unerhitzt, und insbesondere nicht verflüssigt, aufgebracht wird und das Pulver dort im Schmelzbad (des Grundkörpers) ebenfalls das aufgetragene Pulver mittels Laserstrahlung aufgeschmolzen wird. Weiterhin und vorliegend besonders bevorzugt kann auch das Pulver auch bereits während des Auftragens und vor Erreichen der zu beschichtenden Oberfläche durch die Laserstrahlung erhitzt, insbesondere auch bereits in flüssige Form versetzt, werden und somit bereits als zumindest stark erhitztes Pulver, insbesondere als Schmelze bereits verflüssigt, auf die zu beschichtende und ebenfalls angeschmolzene Oberfläche aufgetragen werden.

Bei der fertigen, vorschlagsgemäßen Schienenfahrzeugbremsscheibe ist zwischen dem Grundkörper und der wenigstens einen Reibfläche eine Verbindungsschicht vorgesehen, die aus einer ersten Materialkombination gebildet ist. Insbesondere ist die Vermischung mit dem Material des Grundkörpers nur in einem Grenzbereich minimal vorhanden und die Verbindungsschicht im Wesentlichen nur durch die erste Materialkombination selbst gebildet.

Im Verfahrensschritt c) wird auf die Verbindungsschicht eine Verschleißschicht aufgetragen. Die Verschleißschicht wird dadurch erzeugt, dass ebenfalls mittels Laserauftragsschweißen ein Material auf die Verbindungsschicht aufgetragen wird. Der Reibbereich wird durch den Auftrag der Verschleißschicht so weit aufgedickt, dass das ursprüngliche Untermaß des Grundkörpers im Reibbereich nach erfolgtem Auftrag der Verbindungsschicht und der Verschleißschicht überwunden ist und nach den beiden Verfahrensschritten b) und c) ein Übermaß im Reibbereich vorliegt.

Durch das Laserauftragsschweißen wird in diesem Schritt also die zweite Materialkombination der Verschleißschicht mittels Lasers verflüssigt und in flüssiger Form aufgetragen. Dies kann erneut erfolgen, indem entweder zuvor die Verbindungsschicht, welche zuvor ausgehärtet wurde, auf- bzw. angeschmolzen wird, dann ein Pulver der zweiten Materialkombination aufgetragen und dort jenes Pulver der zweiten Materialkombination im Schmelzbad der Verbindungsschicht (der ersten Materialkombination) weiter durch den Laser aufgeschmolzen wird. Alternativ kann auch das Pulver der Verschleißschicht (zweite Materialkombination) bereits vor Erreichen der zu beschichtenden Oberfläche (hier der Verbindungsschicht) mittels Lasers verflüssigt worden sein und in flüssiger Form aufgetragen werden.

Die Verbindungsschicht trägt dazu bei, die Haftung der final die Reibfläche bereitstellenden Verschleißschicht auf dem Grundkörper zu verbessern. Zudem ist die Herstellung wirtschaftlicher, da das zusätzliche die Verschleißeigenschaften verbessernde Material, welches regelmäßig teuer ist, nur in der Verschleißschicht zur Verfügung gestellt werden muss, nicht jedoch in der Verbindungsschicht. Das Material der Verbindungsschicht bzw. die erste Materialkombination kann vorzugsweise besser mit dem Material des Grundkörpers verbunden werden, als das mit dem Material der Verschleißschicht bzw. der zweiten Materialkombination möglich wäre. Die Verschleißschicht bzw. die zweite Materialkombination kann jedoch sehr gut mit dem Material der Verbindungsschicht (erste Materialkombination) verbunden werden, sodass über die Verbindungsschicht eine gute mittelbare Verbindung der Verschleißschicht an den Grundkörper erreicht werden kann.

Das Material der Verschleißschicht (die zweite Materialkombination) ist so gewählt, dass es während des Bremsvorgangs im Kontakt mit einem Bremsbelag weniger stark verschleißt, als es das Material des Grundkörpers ohne aufgetragene Verschleißschicht tun würde. Dadurch wird die Lebensdauer der Bremsscheibe erhöht, da die Standzeit des Reibbereichs erhöht wird.

Weniger Verschleiß kann zum Beispiel über eine hohe Härte des Materials der Verschleißschicht erreicht werden (bzw. der zweiten Materialkombination). Die Verschleißschicht weist daher insbesondere eine Brinell-Härte von über 150 HB, vorzugsweise über 180 HB, weiter vorzugsweise über 220 HB, auf. Es hat sich als vorteilhaft erwiesen, wenn die Brinell-Härte der Verschleißschicht zwischen 180 HB und 240 HB liegt.

Der Reibbereich weist nach erfolgtem Auftrag der Verbindungsschicht und der Verschleißschicht eine Oberfläche auf, welche sich meist aufgrund ihrer Rauigkeit noch nicht als Reibfläche einer Bremsscheibe, also als Kontaktpartner für einen Bremsbelag, eignet. Durch das Laserauftragsschweißen ergeben sich in der Regel hohe Rauigkeiten, da der Laser die Oberfläche in Bahnen abfährt und so Schweißraupen oder Schmelzlinien mit unterschiedlichen Höhenprofilen hinterlässt.

Zur Verbesserung der Oberflächengüte und zum Erreichen eines Fertigmaßes wird daher in Verfahrensschritt d) der Reibbereich durch einen Schleifvorgang bearbeitet, sodass sich eine geeignete Reibfläche mit geringer Rauigkeit ergibt. Da bei einem Schleifvorgang Material abgetragen wird, bietet es sich an, dass durch die Verfahrensschritte b) und c) so viel Material in dem Reibbereich aufgetragen wird, dass aus dem ursprünglichen Untermaß des Grundkörpers im Reibbereich ein Übermaß im Reibbereich erreicht wird. Dieses Übermaß kann dann durch den Materialabtrag während des Schleifvorgangs in Verfahrensschritt d) auf das Fertigmaß, auch Soll-Abmessung genannt, gebracht werden.

Beim Materialabtrag durch den Schleifvorgang wird lediglich Material der Verschleißschicht abgetragen, sodass die Reibfläche durch eine Oberfläche aus dem Material der Verschleißschicht (zweite Materialkombination) gebildet wird.

Besonders gute Oberflächen werden bei dem Schleifprozess mithilfe von Diamantschleifscheiben erzielt, welche in oszillierenden Bewegungen über die zu bearbeitende Oberfläche geführt werden.

Eine Schienenfahrzeugbremsscheibe kann auf einer Antriebswelle oder einer nicht angetriebenen Radsatzwelle eines Schienenfahrzeugs angeordnet sein. Dazu können Anbindungsstrukturen oder Adapter auf der Antriebswelle bzw. auf der nicht angetriebenen Radsatzwelle vorgesehen sein, an welche Anbindungsstrukturen wiederum die Bremsscheibe angebunden sein kann. Beispielsweise kann die Bremsscheibe durch eine Kombination aus Formschluss und Schraubverbindungen an eine solche Anbindungsstruktur angebunden werden.

Eine solche Anbindungsstruktur kann beispielsweise mithilfe einer Nockenanbindung realisiert werden. Dazu sind in einem Verbindungsbereich zwischen Bremsscheibe und Antriebswelle (bzw. nicht angetriebener Radsatzwelle) Erhebungen in der Bremsscheibe in Form von Nocken vorgesehen, sowie an der Antriebswelle (bzw. an der nicht angetriebenen Radsatzwelle) wiederum entsprechende Vertiefungen, in die die Nocken eingreifen. Umgekehrt können auch Nocken auf der Antriebswelle (bzw. auf der der nicht angetriebenen Radsatzwelle) vorgesehen sein, während die entsprechenden Vertiefungen, in die die Nocken eingreifen sollen, in der Bremsscheibe vorsehen werden. Auf diese Weise wird eine hochbelastbare Verbindung zwischen Bremsscheibe und Antriebswelle (bzw. nicht angetriebener Radsatzwelle) geschaffen, die in der Lage ist, die hohen Kräfte während des Bremsvorgangs zu übertragen. Je nach Anwendungsfall können mehrere Nocken und entsprechende Vertiefungen über den Umfang der Antriebswelle (bzw. der nicht angetriebenen Radsatzwelle) sowie der Bremsscheibe verteilt vorgesehen sein.

Die Bremsscheibe kann statt an eine Antriebswelle oder eine nicht angetriebene Radsatzwelle auch direkt an ein Laufrad des Schienenfahrzeugs mithilfe der zuvor beschriebenen Anbindungsstrukturen angebunden werden.

Es ist auch möglich, dass die Schienenfahrzeugbremsscheibe nicht nur die Bremsfunktion übernimmt, sondern gleichzeitig als Laufrad für ein Schienenfahrzeug dient. Dann ist die Schienenfahrzeugbremsscheibe derart ausgebildet, dass sie in ein Laufrad eines Schienenfahrzeugs integriert ist, wobei die Schienenfahrzeugbremsscheibe dann eine Lauffläche aufweist, die wiederum geeignet ist, das Schienenfahrzeug auf einer Schiene zu führen. In einem solchen Fall bildet das Laufrad dann den vorschlagsgemäßen Grundkörper aus, auf welchen die Verbindungsschicht und die Verschleißschicht vorschlagsgemäß aufgetragen werden.

In einer Ausgestaltung der Erfindung erfolgt in Verfahrensschritt a) das Herstellen des Grundkörpers aus einem Eisengussmaterial. Vorzugsweise handelt es sich bei dem Eisengussmaterial um Gusseisen mit Lamellengraphit oder Gusseisen mit Vermiculargraphit oder Gusseisen mit Kugelgraphit.

Durch einen gut kontrollierten Gussvorgang kann die Geometrie des Grundkörpers präzise gefertigt werden. Dabei kann der Grundkörper sehr nahe an bzw. grundsätzlich sogar in der Soll-Geometrie der herzustellenden Bremsscheibe gegossen werden. Lediglich der wenigstens eine Reibbereich ist vorschlagsgemäß im Untermaß zu fertigen, während die weiteren Flächen bzw. Abschnitte des Grundkörpers, insbesondere wenigstens ein Anbindungsbereich zur Anbindung der Schienenfahrzeugbremsscheibe an einen Antriebsstrang eines Schienenfahrzeugs, mittels des Gussverfahrens auch bereits in einem Fertigmaß hergestellt werden können. Daher zeichnet sich das Verfahren zur Herstellung einer Schienenfahrzeugbremsscheibe in einer weiteren Ausgestaltung dadurch aus, dass ein Anbindungsbereich des Grundkörpers zur Anbindung der Schienenfahrzeugbremsscheibe an einen Antriebsstrang eines Schienenfahrzeugs durch die Herstellung mittels des Gussverfahrens in einem Fertigmaß hergestellt wird.

Unter einem Fertigmaß im Sinne der Anmeldung wird verstanden, dass die Betreffenden Maße der Bauteile im Soll-Bereich liegen, also den Soll-Abmessungen entsprechen, und die Bauteile an dieser Stelle keiner weiteren Bearbeitung bedürfen.

Auch weitere Bereiche der Bremsscheibe können bei der Herstellung des Grundkörpers mittels Gussverfahrens in einem Fertigmaß hergestellt werden. Das betrifft beispielsweise Öffnungen in der Bremsscheibe zur Durchführung von Antriebswellen und/oder zur Aufnahme und Zentrierung der Bremsscheibe auf den Antriebswellen und/oder auf Aufnahmen auf den Antriebswellen, Öffnungen zur Anbindung der Bremsscheibe an den Antriebsstrang des Schienenfahrzeugs, zum Beispiel mittels Verschraubungen, Kühlöffnungen in der Bremsscheibe, Kühlstrukturen in einem Inneren der Bremsscheibe, Kühlöffnungen und/oder Reinigungsöffnungen im Reibbereich bzw. in der Reibfläche der Bremsscheibe und dergleichen.

In einer weiteren Ausführung des Verfahrens weist der Grundkörper zusätzlich zu der wenigstens einen Reibfläche eine gegenüberliegende Reibfläche auf, wobei die gegenüberliegende Reibfläche von der wenigstens einen Reibfläche abgewandt ist. Dabei sind die Reibflächen insbesondere spiegelsymmetrisch zu einer Ebene durch die Bremsscheibe angeordnet. Die Form der Reibflächen entspricht insbesondere einem Kreis mit einer kreisrunden Aussparung in der Mitte des Kreises, sodass sich ein Ring mit einer bestimmten Breite ergibt. Der Durchmesser des Kreises liegt dabei insbesondere in der Größenordnung des Durchmessers der Schienenfahrzeugbremsscheibe.

Eine solche Anordnung zweier einander abgewandter Reibflächen bietet sich an, da so eine Bremszange mit gegenüberliegenden Bremsbelägen die Bremsscheibe umfassen kann und sich die Kräfte aufgrund des Bremsdrucks, welcher auf die Bremsbeläge wirkt, entgegengerichtet sein und sich daher gegeneinander aufheben können. So kann es ausreichend sein, die Bremszange lediglich gegen ein beim Bremsvorgang entstehendes Bremsdrehmoment abzustützen, ohne sie zum Beispiel zusätzlich gegen seitlich auftretende Kräfte aufgrund von asymmetrisch angeordneten Reibflächen abzustützen.

In einer weiteren Ausgestaltung des Verfahrens wird das Untermaß des wenigstens einen Reibbereichs durch Verfahrensschritt b) oder Verfahrensschritt c) auf ein Übermaß gebracht. Vorzugsweise wird das Übermaß durch Verfahrensschritt d. auf Fertigmaß bzw. Soll-Abmessung gebracht. Wie bereits zuvor im Zusammenhang mit Verfahrensschritt d) erläutert, wird durch das Schleifen Material im Reibbereich abgetragen. Daher bietet es sich an den Reibbereich durch das Aufbringen der Verbindungsschicht bzw. der Verschleißschicht auf ein Übermaß zu bringen, um dann beim Schleifen durch den Materialabtrag die gewünschte Soll-Abmessung des Reibbereichs bzw. der Reibfläche zu erreichen. So kann als Reibfläche eine zusammenhängende Fläche, insbesondere Lunker-frei, erzielt werden, welche zusammenhängende Fläche eine bestimmte Oberflächengüte aufweist.

In einer weiteren Ausgestaltung des Verfahrens wird durch das Laserauftragsschweißen in Verfahrensschritt c. mindestens eine Schichtdicke von 150 µm als Verschleißschicht aufgebracht. Da auch die Verschleißschicht einem gewissen Verschleiß unterliegt, sollte eine bestimmte Mindest-Schichtdicke nicht unterschritten werden. Um die Lebensdauer der Bremsscheibe, hergestellt nach dem vorschlagsgemäßen Verfahren, gegenüber herkömmlich hergestellten Bremsscheiben zu erhöhen hat sich eine Schichtdicke von mindestens 150 µm als vorteilhaft erwiesen. Besonders bevorzugt beträgt die Schichtdicke der Verschleißschicht mindestens 215 µm, weiter bevorzugt mindestens 285 µm. Ein besonders vorteilhafter Kompromiss aus Wirtschaftlichkeit, guter Herstellbarkeit und insbesondere gesteigerter Lebensdauer hat sich bei einer Schichtdicke der Verschleißschicht in einem Bereich zwischen 270 µm und 330 µm ergeben.

Vorzugsweise wird in Verfahrensschritt b) eine Schichtdicke von mindestens 50 µm als Verbindungsschicht aufgebracht. Auch die Dicke der Verbindungsschicht hat Einfluss auf die Lebensdauer der Verschleißschicht. Die Verbindungsschicht dient einerseits dazu, die Verschleißschicht sicher mit dem Grundkörper der Bremsscheibe zu verbinden. Auch der gesamten Stabilität und Struktur der aufgebrachten Schichten, die die Verbindungsschicht und die Verschleißschicht umfassen, ist das Vorsehen der Verbindungsschicht zuträglich. So wird die Gesamtschichtdicke erhöht. Ist die Verbindungsschicht wiederum zu dünn, kann sich die Verschleißschicht zumindest teilweise ablösen und den Verschleiß der Bremsscheibe aber auch der Bremsbeläge erhöhen. Auch wirtschaftlich gesehen, ist das Vorsehen einer ausreichend dicken Verbindungsschicht vorteilhaft, da die Dicke der regelmäßig teureren Verschleißschicht dünner gehalten werden kann, bei dennoch gleichzeitiger Bereitstellung einer ausreichend dickend Gesamtschichtdicke (Verbindungsschicht und Verschleißschicht zusammengerechnet). Insbesondere wird eine Schichtdicke der Verbindungsschicht von mindestens 75 µm, weiter bevorzugt mindestens 95 µm, vorgesehen. Es hat sich als besonders vorteilhaft erwiesen, die Schichtdicke der Verbindungsschicht in einem Bereich zwischen 75 µm und 150 µm, vorzusehen.

In einer weiteren Ausgestaltung des Verfahrens ist das Laserauftragsschweißen ein Extrem-Hochgeschwindigkeits-Laserauftragsschweißen. Das Aufbringen des Materials in Verfahrensschritt b) bzw. c) mittels Laserauftragsschweißens kann mittels dem Extrem-Hochgeschwindigkeits-Laserauftragsschweißen, kurz EHLA genannt, deutlich schneller durchgeführt werden. Es sind hohe Auftragsgeschwindigkeiten (beispielsweise größer als 220 cm² pro Minute) möglich. Ebenso können auch sehr dünne Schichtdicken realisiert werden. Besonders vorteilhaft ist, wenn das pulverförmig bereitgestellte Material (1. Materialzusammensetzung im Fall der Verbindungsschicht bzw. 2. Materialzusammensetzung im Fall der Verschleißschicht) bereits vor Erreichen der zu beschichtenden Oberfläche durch die Laserstrahlung erhitzt, insbesondere bereits verflüssigt, wird.

Ein weiterer Vorteil des EHLA-Verfahrens ist, dass weniger Energie vom Laser in die zu bearbeitende Oberfläche, in diesem Fall den Reibbereich des Grundkörpers, eingetragen wird und dadurch weniger Material des Grundkörpers aufgeschmolzen wird. Das führt zu einer geringeren Belastung des Grundkörpers während des Aufbringens der Verbindungsschicht und der Verschleißschicht.

Auch die Materialpaarungen von Grundkörper und Verbindungsschicht können aufgrund des geringeren Wärmeeintrags freier gewählt werden, da sich durch das EHLA-Verfahren Gussmaterialien wie der Grundkörper einfacher beschichten lassen.

In einer weiteren Ausgestaltung des Verfahrens wird in Verfahrensschritt b) eine Verbindungsschicht aus Edelstahl aufgebracht. Edelstahl hat sich zur Aufbringung als Verbindungsschicht bewährt, da es eine gute Haftung zum Gussmaterial des Grundkörpers eingeht und gleichzeitig gute Hafteigenschaften gegenüber verschiedenen Materialien der Verschleißschicht aufweist. Ferner wird eine gute Stabilität der gesamten aufgetragenen Schichten gewährleisten, wenn eine Basis als Art Vermittler-Schicht aus Edelstahl bereitgestellt wird. Insbesondere bietet sich als Verbindungsschicht der Edelstahl 1.4404 (316L) an, welcher dem Prozess entsprechend in Pulverform zugeführt wird.

In Verfahrensschritt c) kann eine Verschleißschicht aus Edelstahl und Wolframcarbid aufgebracht werden. Eine Verschleißschicht aus Edelstahl und Wolframcarbid zeichnet sich durch eine hohe Verschleißbeständigkeit aus. Eine solche Verschleißschicht ist härter als das Gussmaterial des Grundkörpers und ebenfalls härter als eine Schicht aus Edelstahl allein. Die Verschleißschicht aus Edelstahl und Wolframcarbid bindet besonders gut an eine vorzugsweise darunter ausgebildete Verbindungschicht aus Edelstahl an. Durch den Edelstahl in der Verschleißschicht wird eine sehr gute Haftung zur Verbindungsschicht, welche vorzugsweise ebenfalls Edelstahl enthält, realisiert. Insbesondere bietet sich für die Verschleißschicht der Edelstahl 1.4404 (316L) an, wobei es ebenfalls von Vorteil ist, wenn in diesem Fall auch für die Verbindungsschicht der Edelstahl 1.4404 (316L) verwendet wird.

In einer weiteren Ausgestaltung des Verfahrens wird beim Laserauftragsschweißen in Verfahrensschritt c) die Verschleißschicht aus Edelstahl und Wolframcarbid als Gemisch auf die zuvor in Verfahrensschritt b) aufgebrachte Verbindungsschicht aufgebracht. Vorzugsweisewerden, zur Bereitstellung des Gemischs, zunächst Edelstahlpulver und Wolframcarbidpulver miteinander vermischt und danach auf die zuvor in Verfahrensschritt b) aufgebrachte Verbindungschicht aufgebracht. Vorzugsweise wird durch ein vorgelagertes Vermischen der Bestandteile der Verschleißschicht vor dem Aufschmelzen eine gleichmäßigere Verteilung der Bestandteile der Verschleißschicht erreicht. Dies führt zu homogeneren Eigenschaften der Verschleißschicht und einem konstanteren Verhalten hinsichtlich des Verschleißes.

Die Verwendung von Pulvern beim Laserauftragsschweißen hat sich bewährt. So können flexibel verschiedene Zusammensetzungen der aufgebrachten Schichten realisiert werden, während die Schichten selbst sehr homogen mit den verschiedenen Materialien durchmischt sind.

In einer weiteren Ausführung des Verfahrens wird in Verfahrensschritt d. zum Fertigbearbeiten des wenigstens einen Reibbereichs nur ein Schleifvorgang durchgeführt. Nur ein Schleifvorgang im Sinne der Anmeldung bedeutet, dass lediglich ein Schleifmedium mit einer bestimmten Körnung zum Einsatz kommt. Dabei kann das Schleifmedium auch mehrmals über eine Stelle gefahren werden. Beispielsweise kann das Schleifmedium oszillierend über den Reibbereich bzw. über die Reibfläche geführt werden, sodass ein und dieselbe Stelle mehrmals von dem einen Schleifmedium abgefahren wird.

In einer weiteren Ausführung des Verfahrens wird in Verfahrensschritt d. durch den wenigstens einen Schleifvorgang eine finale und vorbestimmte Oberflächenrauheit der Reibfläche erreicht. Die Oberflächenrauheit kann sich beispielsweise auf die gemittelte Rautiefe R_{z} beziehen. Die Oberfläche der Reibfläche muss gewisse Kriterien erfüllen, um mit der Oberfläche des Bremsbelags sinnvoll zusammen wirken zu können. Über den wenigstens einen Schleifvorgang, insbesondere lediglich durch einen einzigen Schleifvorgang, kann eine vorgegebene Zielgröße als gemittelte Rautiefe R_{z} erzielt werden.

Weiter vorteilhaft kann vorgesehen sein, dass die Ebenheit der Reibfläche nach der Herstellung einer vorgegebenen Zielgröße entspricht, wobei sich mit der Ebenheit auf die Rautiefe R_{T} (definiert als Differenz aus maximalem und minimalem Wert des Profils) bezogen wird. Über den wenigstens einen Schleifvorgang, insbesondere lediglich durch einen einzigen Schleifvorgang, kann eine vorgegebene Zielgröße als Rautiefe R_{T} erzielt werden.

Werden zwei gegenüberliegende Reibflächen vorgesehen, ist es von Vorteil, wenn die Planparallelität der beiden Reibflächen zueinander unterhalb von 0,02 mm liegt. Über den wenigstens einen Schleifvorgang, insbesondere lediglich durch einen einzigen Schleifvorgang, kann eine vorgegebene Zielgröße als Planparallelität erzielt werden.

In einer weiteren Ausgestaltung des Verfahrens werden in Verfahrensschritt d. durch den wenigstens einen Schleifvorgang die wenigstens eine Reibfläche sowie gleichzeitig eine/die gegenüberliegende Reibfläche geschliffen. Beim Schleifvorgang wird ein gewisser Anpressdruck des Schleifmediums auf den Reibbereich bzw. die Reibfläche ausgeübt. Dies führt zu einem geringen Verzug der Bremsscheibe während des Schleifvorgangs, was sich negativ auf die Oberflächenqualität auswirken kann. Daher ist es von Vorteil, wenn zwei einander abgewandte Reibflächen im Schleifvorgang gleichzeitig geschliffen werden, sodass sich die Anpressdrücke der beiden Schleifscheiben gegeneinander aufheben können und eine Verformung der Bremsschreibe durch den Anpressdruck beim Schleifvorgang stark reduziert oder verhindert werden kann.

In einer vorteilhaften Ausgestaltung der Schienenfahrzeugbremsscheibe umfasst der Grundkörper ein Eisengussmaterial, vorzugsweise Gusseisen mit Lamellengraphit oder Gusseisen mit Vermiculargraphit oder Gusseisen mit Kugelgraphit. Vorzugsweise besteht der Grundkörper im Wesentlichen ausschließlich aus einem Eisengussmaterial. Unter im Wesentlichen ausschließlich aus einem Eisengussmaterial bestehend ist zu verstehen, dass dem Grundkörper für den bestimmungsgemäßen Einsatz als Bremsscheibe zusätzlich zu dem gegossenen Eisengussmaterial keine weiteren Materialien hinzuzufügen sind, abgesehen von den vorschlagsgemäßen beiden Schichten der Verbindungsschicht und der Verschleißschicht.

In einer weiteren Ausgestaltung der Schienenfahrzeugbremsscheibe beträgt eine Schichtdicke der Verschleißschicht mindestens 150 µm, vorzugsweise mindestens 215 µm, weiter bevorzugt mindestens 285 µm. Ein besonders vorteilhafter Kompromiss aus Wirtschaftlichkeit, guter Herstellbarkeit und insbesondere gesteigerter Lebensdauer hat sich bei einer Schichtdicke der Verschleißschicht in einem Bereich zwischen 270 µm und 330 µm ergeben. Vorzugsweise beträgt eine Schichtdicke der Verbindungsschicht mindestens 50 µm, vorzugsweise mindestens 75 µm, weiter bevorzugt mindestens 95 µm. Es hat sich als besonders vorteilhaft erwiesen, die Schichtdicke der Verbindungsschicht in einem Bereich zwischen 75 µm und 150 µm, vorzusehen.

In einer weiteren Ausgestaltung der Schienenfahrzeugbremsscheibe umfasst die erste Materialkombination der Verbindungsschicht Edelstahl und/oder die zweite Materialkombination der Verschleißschicht Edelstahl und Wolframcarbid.

Besonders vorteilhaft ist die vorschlagsgemäße Schienenfahrzeugbremsscheibe durch ein zuvor bzw. nachfolgend beschriebenes, vorschlagsgemäßes Verfahren zur Herstellung einer Schienenfahrzeugbremsscheibe hergestellt.

Nach einem weiteren unabhängigen Aspekt der vorliegenden Erfindung wird eine Baugruppe vorgeschlagen, umfassend eine vorschlagsgemäße Schienenfahrzeugbremsscheibe und eine Radsatzwelle eines Schienenfahrzeugs, wobei die Schienenfahrzeugbremsscheibe auf der Radsatzwelle montierbar ist bzw. montiert ist. Ferner kann die Baugruppe ein Laufrad des Schienenfahrzeugs umfassen, welches Laufrad auf der Radsatzwelle montierbar ist bzw. montiert ist.

Nach einem weiteren unabhängigen Aspekt der vorliegenden Erfindung wird eine Baugruppe vorgeschlagen, umfassend eine vorschlagsgemäße Schienenfahrzeugbremsscheibe und ein Laufrad eines Schienenfahrzeugs, wobei (i) die Schienenfahrzeugbremsscheibe auf dem Laufrad montiert ist oder wobei (ii) die Schienenfahrzeugbremsscheibe auf dem Laufrad ausgebildet ist und das Laufrad als Grundkörper der Schienenfahrzeugbremsscheibe dient. Ferner kann die Baugruppe eine Radsatzwelle des Schienenfahrzeugs umfassen, wobei das Laufrad auf der Radsatzwelle montierbar ist bzw. montiert ist.

Die vorliegende Erfindung wird nachfolgend anhand von Ausführungsbeispielen unter Bezugnahme auf die beigefügten Figuren eingehend erläutert. Es zeigen:
- Figur 1: eine Schienenfahrzeugbremsscheibe mit zwei einander gegenüberliegenden Reibflächen, und
- Figur 2: einen Schnitt der Schienenfahrzeugbremsscheibe aus Fig. 1 durch einen der Reibbereiche.

In den Figuren bezeichnen - soweit nicht anders angegeben - gleiche Bezugszeichen gleiche oder einander entsprechende Komponenten mit gleicher Funktion.

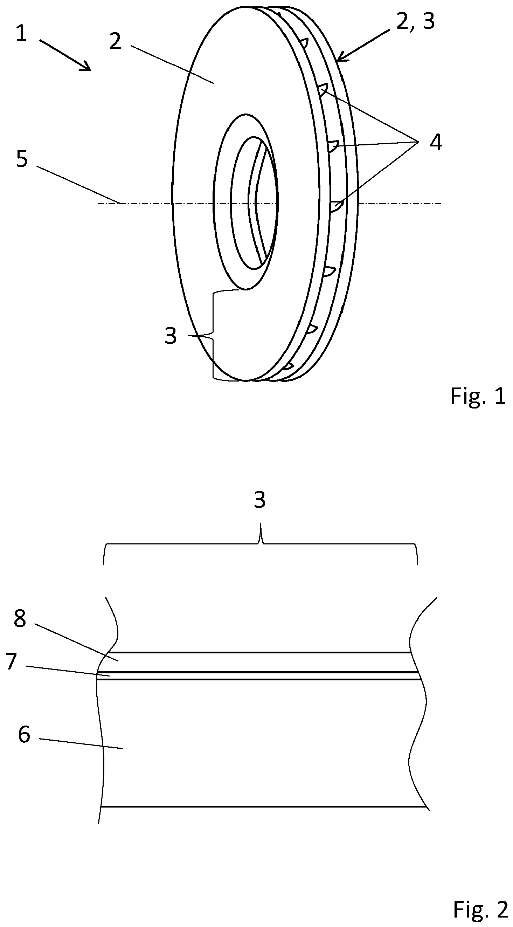

Figur 1 zeigt eine Schienenfahrzeugbremsscheibe 1 mit zwei einander gegenüberliegenden Reibflächen 2 (wenigstens eine Reibfläche 2 sowie die gegenüberliegende Reibfläche 2). Die beiden Reibflächen 2 sind einander abgewandt und spiegelsymmetrisch zueinander angeordnet. Die in Figur 1 dem Betrachter zugewandte Reibfläche 2 hat eine ringförmige Form. Die dem Betrachter abgewandte, größtenteils verdeckte Reibfläche 2 hat dieselbe ringförmige Form wie die vordergründige Reibfläche 2.

Zwischen den beiden Reibflächen 2 sind in einem Inneren der Schienenfahrzeugbremsscheibe 1 Kühlstrukturen 4 vorgesehen. Diese Kühlstrukturen 4 sind konzentrisch zu einer Drehachse 5 der Schienenfahrzeugbremsscheibe 1 angeordnet. Dreht sich die Schienenfahrzeugbremsscheibe 1 um die Drehachse 5, wird die zwischen den Kühlstrukturen 4 befindliche Luft durch die Zentrifugalkraft nach außen gedrückt und frische, kühle Luft aus Richtung der Drehachse 5 angesogen und ebenfalls durch die Kühlstrukturen 4 gefördert. Durch diesen kontinuierlichen Strom an kühler Luft wird die Schienenfahrzeugbremsscheibe 1 von innen über die Kühlstrukturen 4 gekühlt und kann die bei einem Bremsvorgang in die Reibflächen 2 eingetragene Wärme abführen.

Die Schienenfahrzeugbremsscheibe 1 ist im Wesentlichen rotationssymmetrisch in Bezug auf die Drehachse 5. Im Wesentlichen rotationssymmetrisch meint an dieser Stelle, dass gewisse Strukturen wie zum Beispiel die Kühlstrukturen 4 lediglich konzentrisch angeordnet sind, nicht jedoch rotationssymmetrisch. Der Gesamtcharakter der rotationssymmetrischen Schienenfahrzeugbremsscheibe 1 bleibt dadurch jedoch unberührt.

Die Schienenfahrzeugbremsscheibe 1 ist aus einem Grundkörper 6 hergestellt, dessen Reibbereiche 3 mit einer Verbindungsschicht 7 und einer Verschleißschicht 8 versehen sind, was in Figur 2 gut zu erkennen ist.

Figur 2 zeigt einen Schnitt der Schienenfahrzeugbremsscheibe 1 aus Figur 1 durch einen der Reibbereiche 3. Zu sehen ist, dass auf dem Grundkörper 6 eine Verbindungsschicht 7, im vorliegend dargestellten und insofern bevorzugten Ausführungsbeispiel aus Edelstahl, aufgebracht ist und auf der Verbindungsschicht 7 wiederum eine Verschleißschicht 8, im vorliegend dargestellten und insofern bevorzugten Ausführungsbeispielaus Edelstahl und Wolframcarbid, aufgebracht ist.

Figur 2 gibt den Reibbereich 3 nicht maßstabsgetreu wieder, sondern dient der prinzipiellen Verdeutlichung. Die Verbindungsschicht 7 hat gemäß bevorzugten Ausführungsbeispiel eine Schichtdicke von 100 µm und ist wesentlich dünner als die Verschleißschicht 8 mit einer Schichtdicke gemäß bevorzugten Ausführungsbeispiel von 300 µm.

Dabei ist gut zu erkennen, dass der Grundkörper 6 im Reibbereich 3 zunächst, das heißt ohne die beiden zusätzlichen Schichten der Verbindungsschicht 7 und Verschleißschicht 8, ein Untermaß aufweist. Dies ist in der Herstellung des Grundkörpers 6 im Gussverfahren bewusst so vorgesehen. Durch das Aufbringen der Verbindungsschicht 7 und der Verschleißschicht 8 im Reibbereich 3 wird der Grundkörper 6 im Reibbereich 3 aufgedickt. Durch das Aufbringen der Verbindungsschicht 7 und der Verschleißschicht 8 erhält der Reibbereich 3 zunächst ein Übermaß und wird durch einen nachgelagerten Schleifvorgang auf die Soll-Abmessung bzw. das Fertigmaß gebracht.

Nach dem Schleifvorgang bildet die geschliffene Oberfläche der Verschleißschicht 8 die Reibfläche 2 und kann eine geforderte, vorbestimmte Oberflächengüte, wie etwa eine als Zielgröße vorgegebene Rauigkeit, beispielsweise eine vorgegebene gemittelte Rautiefe R_{z} und/oder eine vorgegebene Rautiefe R_{T} und/oder auch eine vorgegebene Zielgröße einer Planparallelität, aufweisen.

### Bezugszeichenliste

- 1: Schienenfahrzeugbremsscheibe
- 2: Reibfläche
- 3: Reibbereich
- 4: Kühlstrukturen
- 5: Drehachse
- 6: Grundkörper
- 7: Verbindungsschicht
- 8: Verschleißschicht

## Patentansprüche

1. Verfahren zur Herstellung einer Schienenfahrzeugbremsscheibe (1), umfassend die folgenden Schritte:
a) Herstellen eines Grundkörpers (6) mittels eines Gussverfahrens, wobei der Grundkörper (6) wenigstens einen Reibbereich (3) aufweist, und wobei der wenigstens eine Reibbereich (3) zunächst in einem Untermaß hergestellt wird,
b) Aufbringen einer Verbindungsschicht (7) auf den wenigstens einen Reibbereich (3) mittels Laserauftragsschweißens,
c) Aufbringen einer Verschleißschicht (8) auf die Verbindungsschicht (7) mittels Laserauftragsschweißens, und
d) Fertigbearbeiten des wenigstens einen Reibbereichs (3) durch wenigstens einen Schleifvorgang zu einer Reibfläche (2).

2. Verfahren nach dem vorhergehenden Anspruch,
**dadurch gekennzeichnet, dass**
in Verfahrensschritt a) das Herstellen des Grundkörpers (6) aus einem Eisengussmaterial, vorzugsweise aus Gusseisen mit Lamellengraphit oder Gusseisen mit Vermiculargraphit oder Gusseisen mit Kugelgraphit, erfolgt.

3. Verfahren nach einem der vorhergehenden Ansprüche,
**dadurch gekennzeichnet, dass**
der Grundkörper (6) zusätzlich zu der wenigstens einen Reibfläche (2) eine gegenüberliegende Reibfläche (2) aufweist, wobei die gegenüberliegende Reibfläche (2) von der wenigstens einen Reibfläche (2) abgewandt ist.

4. Verfahren nach einem der vorhergehenden Ansprüche,
**dadurch gekennzeichnet, dass**
das Untermaß des wenigstens einen Reibbereichs (3) durch Verfahrensschritt b) oder Verfahrensschritt c) auf ein Übermaß gebracht wird, vorzugsweise, dass das Übermaß durch Verfahrensschritt d) auf Fertigmaß gebracht wird.

5. Verfahren nach einem der vorhergehenden Ansprüche,
**dadurch gekennzeichnet, dass**
durch das Laserauftragsschweißen in Verfahrensschritt c) eine Schichtdicke von mindestens 150 µm, vorzugsweise mindestens 215 µm, weiter bevorzugt mindestens 285 µm, als Verschleißschicht (8) und/oder in Verfahrensschritt b) eine Schichtdicke von mindestens 50 µm, vorzugsweise mindestens 75 µm, weiter bevorzugt mindestens 95 µm, als Verbindungsschicht (7) aufgebracht werden/wird.

6. Verfahren nach einem der vorhergehenden Ansprüche,
**dadurch gekennzeichnet, dass**
das Laserauftragsschweißen ein Extrem-Hochgeschwindigkeits-Laserauftragsschweißen ist.

7. Verfahren nach einem der vorhergehenden Ansprüche,
**dadurch gekennzeichnet, dass**
in Verfahrensschritt b) die Verbindungsschicht (7) aus Edelstahl aufgebracht wird und/oder in Verfahrensschritt c) die Verschleißschicht (8) aus Edelstahl und Wolframcarbid aufgebracht wird.

8. Verfahren nach dem vorhergehenden Anspruch,
**dadurch gekennzeichnet, dass**
beim Laserauftragsschweißen der Verschleißschicht (8) in Verfahrensschritt c) die Verschleißschicht (8) aus Edelstahl und Wolframcarbid als Gemisch auf die zuvor in Verfahrensschritt b) aufgebrachte Verbindungsschicht (7) aufgebracht wird, vorzugsweise, dass, zur Bereitstellung des Gemischs, zunächst Edelstahlpulver und Wolframcarbidpulver miteinander vermischt werden und danach auf die zuvor in Verfahrensschritt b) aufgebrachte Verbindungschicht (7) aufgebracht werden.

9. Verfahren nach einem der vorhergehenden Ansprüche,
**dadurch gekennzeichnet, dass**
in Verfahrensschritt d) zum Fertigbearbeiten des wenigstens einen Reibbereichs (3) nur ein Schleifvorgang durchgeführt wird.

10. Verfahren nach einem der vorhergehenden Ansprüche,
**dadurch gekennzeichnet, dass**
in Verfahrensschritt d) durch den wenigstens einen Schleifvorgang eine finale und vorbestimmte Oberflächenrauheit der Reibfläche (2) erreicht wird.

11. Verfahren nach einem der vorhergehenden Ansprüche,
**dadurch gekennzeichnet, dass**
in Verfahrensschritt d) durch den wenigstens einen Schleifvorgang die wenigstens eine Reibfläche (2) sowie gleichzeitig eine/die gegenüberliegende Reibfläche (2) geschliffen werden.

12. Schienenfahrzeugbremsscheibe (1) mit einem Grundkörper (6) und mit wenigstens einer Reibfläche (2) zur Kontaktierung mit einem Bremsbelag zum Bremsen eines Schienenfahrzeugs, wobei der Grundkörper (6) aus einem Eisengussmaterial hergestellt ist
**dadurch gekennzeichnet, dass**
zwischen dem Grundkörper (6) der wenigstens einen Reibfläche (2) sowohl eine, vorzugsweise mittels Laserauftragsschweißens aufgebrachte, Verbindungsschicht (7) als auch eine, vorzugsweise mittels Laserauftragsschweißens aufgebrachte, Verschleißschicht (8) vorgesehen sind, wobei die Verbindungsschicht (7) aus einer ersten Materialkombination gebildet ist und wobei die Verschleißschicht (8) aus einer zweiten Materialkombination gebildet ist, wobei die zweite Materialkombination von der ersten Materialkombination abweicht, wobei die wenigstens eine Reibfläche (2) durch eine Außenseite der Verschleißschicht (8) ausgebildet ist.

13. Schienenfahrzeugbremsscheibe (1) nach Anspruch 12,
**dadurch gekennzeichnet, dass**
der Grundkörper (6) ein Eisengussmaterial, vorzugsweise Gusseisen mit Lammellengraphit oder Gusseisen mit Vermiculargraphit oder Gusseisen mit Kugelgraphit, umfasst.

14. Schienenfahrzeugbremsscheibe (1) nach einem der Ansprüche 12 bis 13,
**dadurch gekennzeichnet, dass**
eine Schichtdicke der Verbindungsschicht (7) mindestens 50 µm, vorzugsweise mindestens 75 µm, weiter bevorzugt mindestens 95 µm, beträgt und/oder eine Schichtdicke der Verschleißschicht (8) mindestens 150 µm, vorzugsweise mindestens 215 µm, weiter bevorzugt mindestens 285 µm, beträgt.

15. Schienenfahrzeugbremsscheibe (1) nach einem der Ansprüche 12 bis 14,
**dadurch gekennzeichnet, dass**
die erste Materialkombination der Verbindungsschicht (7) Edelstahl umfasst und/oder die zweite Materialkombination der Verschleißschicht (8) Edelstahl und Wolframcarbid umfasst.
